# EUROPEAN PATENT SPECIFICATION

(11) **EP 3 980 372 B1**
(45) Date of publication and mention of the grant of the patent: **26.07.2023**
(21) Application number: 20736425.8
(22) Date of filing: 05.06.2020
(51) Int. Cl.: C01B 3/32, C01B 3/56

(54) **PROCESS FOR THE PRODUCTION OF HYDROGEN**
VERFAHREN ZUR HERSTELLUNG VON WASSERSTOFF
PROCÉDÉ DE PRODUCTION D'HYDROGÈNE

(30) Priority: 06.06.2019 IT 201900008277
(43) Date of publication of application: 13.04.2022
(73) Proprietor: WOOD ITALIANA S.R.L., 20094 Corsico (MI) (IT)
(72) Inventor: RUGGERI, Fabio, 20094 Corsico (MI) (IT); MANCUSO, Luca, 20094 Corsico (MI) (IT); DEPETRI, Valentina, 20094 Corsico (MI) (IT)
(74) Representative: Cernuzzi, Daniele
(86) International application number: PCT/IB2020/055322
(87) International publication number: WO 2020/245794

(56) References cited:
- EP-A1- 2 813 466
- EP-A1- 3 018 095
- US-A1- 2006 127 305
- US-A1- 2008 021 121
- CZERNIK ET AL: "Hydrogen from biomass-production by steam reforming of biomass pyrolysis oil", CATALYSIS TODAY, ELSEVIER, AMSTERDAM, NL, vol. 129, no. 3-4, 15 November 2007 (2007-11-15), pages 265-268, XP022346307, ISSN: 0920-5861, DOI: 10.1016/J.CATTOD.2006.08.071

## Description

### CROSS-REFERENCE TO RELATED APPLICATIONS

This patent application claims priority from Italian patent application no. 102019000008277 filed on 06/06/2019.

### TECHNICAL FIELD

The present invention relates to a process for the production of hydrogen, in particular (though not only) from renewable feedstocks obtained from biomass.

### BACKGROUND ART

Hydrogen production, in particular for the purpose of generating energy, is an increasingly interesting sector.

However hydrogen production must as well face problems regarding energy efficiency and carbon emissions into the atmosphere.

At present, hydrogen is commonly produced on a large scale by means of reforming processes with natural gas steam. These processes however result in high CO2 emissions.

A method for reducing CO2 emissions is to produce hydrogen from renewable sources rather than from traditional hydrocarbons.

It is known, for example, producing hydrogen by reforming reactions with ethanol steam obtained from biomass.

The known processes for producing hydrogen based on renewable feedstock reforming reactions do not seem to be totally satisfactory, in particular in terms of energy efficiency as well as plant and functioning costs.

In alternative, still for the purpose of preventing CO2 emissions, it is known producing hydrogen by electrolysis. The electrolysis hydrogen production requires however energy consumptions and ultimately notably high costs.

### DISCLOSURE OF INVENTION

It is an object of the present invention to provide a process for producing hydrogen that overcomes the herein mentioned drawbacks of the prior art.

It is therefore a particular object of the invention to provide an equally efficient and possibly simpler and more cost-effective alternative for producing hydrogen with respect to known technologies.

It is a further particular object of the invention to provide a process for producing hydrogen that fulfils the increasing demands for high efficiency and low CO2 emissions.

The present invention thus relates to a process for producing hydrogen as essentially defined in the enclosed claim 1.

Auxiliary preferred characters of the invention are defined in the dependent claims.

According to the invention, hydrogen is produced by means of steam reforming of an initial renewable feedstock, such as ethanol from biomass.

Preferably (though not necessarily), the treated feedstock is ethanol; in fact, ethanol is a renewable feedstock, which can be produced from different types of biomass; it has low production costs; it is easy and safe to be treated.

The process of the invention can however use also other renewable feedstocks, such as: alcohols (such as ethanol, glycerol, etcetera), vegetable oils (soybean oil, palm oil, etcetera), bio-oils (pyrolysis oil) and the like.

In alternative, though, the process of the invention can also use hydrocarbon feedstocks, for example vacuum gas oil (VGO), light combustible oils, deasphalted oils (which however require preliminary treatments, in particular desulphurisation).

If compared to the prior art reforming processes, the invention provides some distinctive modifications making the overall process more efficient and advantageous.

In particular, the main modifications relate to the operative conditions (in particular, hydrogen partial pressure) and the use of specific equipment (in particular, an ejector rather than a traditional compressor) for hydrogen recirculation.

The invention thus provides a process for producing hydrogen which simply, cost-effectively and totally efficiently avoids the problems and drawbacks of the prior art and thus represents an effective alternative to the known technologies.

In particular, the process of the invention fully fulfils the increasing demand for high efficiency and low CO2 emissions.

The process of the invention, besides being economically competitive, further allows to produce a synthesis gas which, unlike the one obtained for example by electrolysis, is suitable to be used in various applications, including production of chemical species which require high concentration hydrogen, without requiring supplementary treatments.

### BRIEF DESCRIPTION OF THE DRAWINGS

Further features and advantages of the present invention will become clear from the following description of an exemplary and non-limiting embodiment thereof, with reference to the enclosed figures wherein:
- figure 1 is a block diagram of an actuating plant of a hydrogen production process according to the invention;
- figure 2 is a C-O-H ternary plot which illustrates some operative conditions selected for the process of the invention.

### BEST MODE FOR CARRYING OUT THE INVENTION

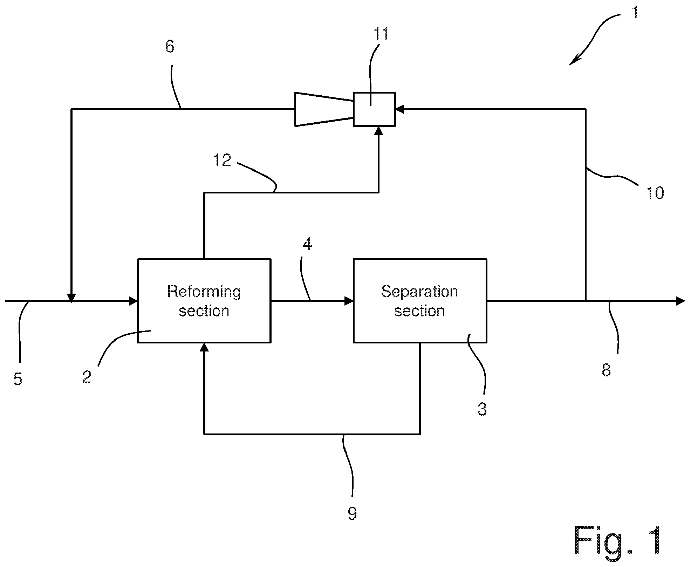

In figure 1, a plant for producing hydrogen by performing the process of the invention is indicated by 1.

The plant 1 comprises a reforming section 2 and a separating section 3, connected in series by a connecting line 4.

A feedstock to be treated, such as ethanol produced from biomasses, is supplied to the reforming section 2 through a supply line 5 and represents a charge to be reformed in the reforming section 5.

The treated feedstock (charge) may be, in addition to ethanol, another renewable feedstock, obtained from biomass or other; for example, in the process of the invention feedstocks can be used such as: alcohols (such as ethanol, glycerol, etcetera), vegetable oils (soybean oil, palm oil, etcetera), bio-oils (pyrolysis oil) and the like.

In alternative, the process of the invention can also employ hydro-carbon feedstocks, such as for example vacuum gas oil (VGO), light combustible oils, deasphalted oils (which however require preliminary treatments, in particular desulphurisation).

The reforming section 2 comprises at least a steam reforming reactor, provided with a catalyst for reforming reactions.

The feedstock is supplied to the reforming section 2 together with a steam flow, which in this case comes from an auxiliary supply line 6 which is inserted in the supply line 5 downstream of the reforming section 2, as further described hereinafter.

In the reforming section 2 the feedstock is placed in contact with the catalyst in presence of steam and it undergoes reforming reactions with hydrogen formation.

A raw hydrogen reformed stream is obtained from the reforming section 2 which is sent, through the connecting line 4, to the separating section 3, where the separating step is performed to increase hydrogen concentration.

The separating section 3 is, for example, of the pressure swing adsorption type (PSA) and therefore includes at least a PSA unit where the high pressure gas stream coming from the reforming section contacts a selective adsorption porous material.

The species captured at high pressure by the adsorption material are then released following a pressure reduction.

The separating section 3 separates a high concentration hydrogen stream, passing through a hydrogen outlet line 8, from a recovered gas stream (containing CO2, residual methane, etcetera) which is recirculated through a gas line 9 to the reforming step 2.

A high concentration hydrogen reaction leaving the separating section 3 is extracted from the hydrogen outlet line 8 and recirculated into the reforming section 2, by means of a recirculation line 10.

The recirculation line 10 is provided with an ejector 11 which uses as a driving fluid for recirculating hydrogen a flow of steam coming from the reforming step 2, extracted from the reforming section 2 by means of a steam line 12.

The ejector 11 thus has a hydrogen inlet, connected to the recirculation line 10, and a steam inlet, connected to the steam line 12, and uses kinetic energy of the steam flow (driving fluid) to drag the hydrogen stream (driven stream).

The ejector 11 has an outlet connected to the auxiliary supply line 6 that is inserted in the supply line 5 upstream of the reforming section 2 to provide steam to the reforming section.

According to the invention, the steam reforming step is performed under selected thermodynamic conditions.

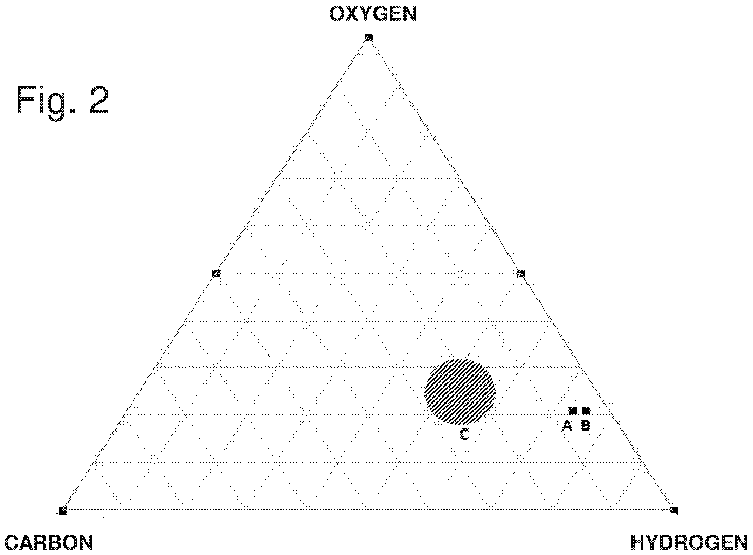

In particular, in a C-O-H ternary plot (figure 2) expressed in molar percentages (i.e. on each side of the plot the molar percentages of the various components are reported), reforming is performed in a zone having H between 70 and 90%, carbon between 5 and 35%, oxygen between 10 and 40%.

For this purpose, a portion of high concentration hydrogen leaving the separating step (i.e. the separating section 3) is recirculated into the reforming step performed in the reforming section 2, resulting in a dry fraction of hydrogen entering into the reforming section 2 that is greater of or equal to 50%, preferably greater of or equal to 60%, preferably greater of or equal to 70% or more (molar percentages), with respect to the charge to be reformed (that is the feedstock supplied to the reforming section 2 for the reforming step). In other terms, a hydrogen stream, extracted from the separating step, is recirculated to the reforming step, such that the hydrogen entering the reforming section 2 is greater of or equal to 50%, preferably greater of or equal to 60%, more preferably greater of or equal to 70%, in moles with respect to the charge to be reformed.

The high amount of high concentration hydrogen which is extracted from the separating step and recirculated to the reforming step distinguishes the invention process from the prior art processes, where the possible recirculation of hydrogen is limited to relatively small amounts with the only purpose to hydrogenate potential olefins present in the charge and transform organic sulphur into H2S which will later be captured by a suitable equipment.

The present invention, if compared to the state of the art, implies a substantial modification of the reaction conditions and the high hydrogen content has a deep effect on the nature of the reactive system, both as regards reduction of the partial pressures of the other components in the mixture, and in particular as it promotes reactions removing carbon deposits that will inevitably form due to the reactive path of oxygenated components inevitably existing in predominant amounts in renewable feedstocks obtained from biomass.

Such effect has been examined both from a merely kinetic and thermodynamic perspective and from an experimental perspective, showing the efficacy of the proposed solution; in fact it was clearly noted that in standard conditions (fraction of hydrogen to the charge of around 20 mole%, as is typical in the prior art processes) a sudden formation of a carbon substance takes place (highlighted by a spectrographic and visual analysis) on the catalyst with a catastrophic deactivation within a few hours. By contrast, operating according to the conditions of the invention, no deactivation was noted within a range of 100 hours of continuous operation.

The process conditions of the reforming step are therefore significantly different from those of the typical reforming conditions of the prior art, as noted in the plot of figure 2 for comparison purposes). In figure 2 the potential working area for bio-derived charges according to the current state of the art (area C) is represented, while point B represents the operation for the aforesaid charges according to the present invention; it follows from figure 2 that point B is in conditions similar to the current state of the art for fossil mixtures that are free from oxygenated compounds (point A) making the operation far less critical from a thermodynamic perspective.

The process is advantageously performed without supplying steam from the outside, and without necessarily producing steam towards the outside.

In other words, once the process is at the operating speed (following possible transitory steps of initiation and triggering reforming reactions), the steam reforming step is performed in the reforming section 2 with only the steam already present and circulating into the plant 1, without adding steam from the outside.

The process is also advantageously performed without necessarily supplying supplementary fuel from outside.

It must be also understood that further changes and variants can be brought to the herein described and illustrated process without departing from the scope of the enclosed claims.

## Claims

1. A process for the production of hydrogen, comprising a step of reforming a carbon-containing feedstock to obtain a raw hydrogen reformed stream; a step of separating the raw hydrogen reformed stream to increment the concentration of hydrogen and separate a high concentration hydrogen from a recovered gas stream; a step of recirculating a portion of the high concentration hydrogen produced in the separating step to the reforming step together with a steam flow; wherein a high concentration hydrogen stream produced in the separating step is recirculated to the reforming step such that the hydrogen entering into the reforming step is greater of or equal to 50 mol% with respect to the feedstock to be reformed.

2. A process according to claim 1, wherein the feedstock is a feedstock from renewable sources selected in the group consisting of: alcohols, for example ethanol or glycerol; vegetable oils, such as soybean oil, palm oil, etcetera; bio-oils or pyrolysis oils.

3. A process according to claim 1, wherein the feedstock is ethanol produced from biomass.

4. A process according to one of the preceding claims, wherein the reforming step is a catalytic steam reforming step, in which the feedstock is contacted with a catalyst in the presence of steam and is subjected to reforming reactions with formation of hydrogen.

5. A process according to one of the preceding claims, wherein the separating step is performed by pressure swing adsorption on a selective adsorption porous material.

6. A process according to one of the preceding claims, wherein the recirculating step is performed by means of an ejector using as a driving fluid for recirculating hydrogen a flow of steam coming from the reforming step.

7. A process according to one of the preceding claims, comprising a gas recirculating step, in which the recovered gas stream separated in the separating step is recirculated to the reforming step.

8. A process according to one of the preceding claims, wherein the reforming step is performed under thermodynamic conditions selected so as to operate, in a C-O-H ternary plot expressed in molar percentages, in a zone having H between 70 and 90%, carbon between 5 and 35%, oxygen between 10 and 40%.

9. A process according to one of the preceding claims, wherein the portion of the high concentration hydrogen from the separating step which is recirculated to the reforming step is selected so as to result in a dry fraction of hydrogen entering into the reforming step greater of or equal to 60%, preferably greater of or equal to 70% or more, in moles with respect to the feedstock to be reformed supplied to the reforming step.

10. A process according to one of the preceding claims, wherein when the process is in steady operation, i.e. after transitory steps of initiating and triggering the reforming reactions, the steam reforming step is performed only with the steam already present and used in the process without supplying steam from the outside; and without necessarily producing steam to be exported to the outside.

## Patentansprüche

1. Ein Verfahren zur Herstellung von Wasserstoff, aufweisend einen Schritt des Reformierens eines kohlenstoffhaltigen Ausgangsstoffs, um einen Rohwasserstoff-Reformierungsstrom zu erhalten; einen Schritt des Separierens des Rohwasserstoff-Reformierungsstroms, um die Konzentration von Wasserstoff zu erhöhen und Wasserstoff in einer hohen Konzentration von einem wiedergewonnenen Gasstrom zu separieren, einen Schritt des Rezirkulierens eines Anteils des in dem Separationsschritt hergestellten Wasserstoffs mit der hohen Konzentration zu dem Reformierungsschritt zusammen mit einem Dampffluss; wobei ein Wasserstoffstrom mit einer hohen Konzentration, der in dem Separationsschritt hergestellt wird, derart zu dem Reformierungsschritt rezirkuliert wird, dass der in den Reformierungsschritt eintretende Wasserstoff größer oder gleich 50 Mol% in Bezug auf den zu reformierenden Ausgangsstoff ist.

2. Ein Verfahren nach Anspruch 1, wobei der Ausgangsstoff ein Ausgangsstoff aus erneuerbaren Quellen ist, die ausgewählt sind aus der Gruppe bestehend aus Alkoholen, beispielsweise Ethanol oder Glyzerin; pflanzliche Öle, beispielsweise Sojaöl, Palmöl, etc; Bio-Öle oder Pyrolyseöle.

3. Ein Verfahren nach Anspruch 1, wobei der Ausgangsstoff aus Biomasse hergestelltes Ethanol ist.

4. Ein Verfahren nach einem der vorhergehenden Ansprüche, wobei der Reformierungsschritt ein katalytischer Dampfreformierungsschritt ist, in welchem der Ausgangsstoff mit einem Katalysator in Anwesenheit von Dampf kontaktiert wird und Reformierungsreaktionen mit der Bildung von Wasserstoff ausgesetzt wird.

5. Ein Verfahren nach einem der vorhergehenden Ansprüche, wobei der Separationsschritt durch Druckwechseladsorption auf ein poröses Material mit einer ausgewählten Adsorption durchgeführt wird.

6. Ein Verfahren nach einem der vorhergehenden Ansprüche, wobei der Rezirkulationsschritt mittels eines Ejektors, der als ein Treibfluid zur Rezirkulation von Wasserstoff eines aus dem Reformierungsschritt kommenden Dampfstroms benutzt wird, durchgeführt wird

7. Ein Verfahren nach einem der vorhergehenden Ansprüche aufweisend einen Gasrezirkulationsschritt, in welchem der in dem Separationsschritt separierte wiedergewonnene Gasstrom zu dem Reformierungsschritt rezirkuliert wird.

8. Ein Verfahren nach einem der vorhergehenden Ansprüche, wobei der Reformierungsschritt unter thermodynamischen Bedingungen durchgeführt wird, die ausgewählt sind, um zu arbeiten in einem in molaren Prozentwerten ausgedrückten C-O-H Dreiecksdiagramm, in einer Zone mit H zwischen 70 und 90%, Kohlenstoff zwischen 5 und 35%, Sauerstoff zwischen 10 und 40%.

9. Ein Verfahren nach einem der vorhergehenden Ansprüche, wobei der Anteil des Wasserstoffs mit der hohen Konzentration aus dem Separationsschritt, der zu dem Reformierungsschritt rezirkuliert wird, derart ausgewählt wird, dass dieser in einem Trockenanteil von in den Reformierungsschritt eintretenden Wasserstoff von größer oder gleich 60%, vorzugsweise größer oder gleich 70% oder mehr resultiert, in Mol in Bezug auf den zu reformierenden Ausgangsstoff, der dem Reformierungsschritt zugeführt wird.

10. Ein Verfahren nach einem der vorhergehenden Ansprüche, wobei, wenn der Prozess in einem stabilen Zustand ist, d. h. nach Übergangsschritten des Initiierens und Triggerns der Reformierungsreaktionen, der Dampfreformierungsschritt nur mit dem Dampf durchgeführt wird, der bereits zur Verfügung steht und in dem Prozess ohne die Zufuhr von Dampf von außen benutzt wird, und ohne notwendigerweise nach außen zu führenden Dampf zu produzieren.

## Revendications

1. Procédé de production d'hydrogène, comprenant une étape de reformage d'une charge contenant du carbone pour obtenir un flux reformé d'hydrogène brut ; une étape de séparation du flux reformé d'hydrogène brut pour incrémenter la concentration d'hydrogène et séparer un hydrogène à haute concentration d'un flux de gaz récupéré ; une étape de recyclage d'une partie de l'hydrogène à haute concentration produit à l'étape de séparation vers l'étape de reformage conjointement à un écoulement de vapeur ; dans lequel un flux d'hydrogène à haute concentration produit à l'étape de séparation est recyclé vers l'étape de reformage de manière à ce que l'hydrogène entrant à l'étape de reformage soit supérieur ou égal à 50 % en moles par rapport à la charge à reformer.

2. Procédé selon la revendication 1, dans lequel la charge est une charge de sources renouvelables sélectionnées dans le groupe consistant en : des alcools, par exemple l'éthanol ou le glycérol ; des huiles végétales, par exemple l'huile de soja, l'huile de palme, etc. ; des huiles biologiques ou des huiles de pyrolyse.

3. Procédé selon la revendication 1, dans lequel la charge est l'éthanol produit à partir de biomasse.

4. Procédé selon l'une quelconque des revendications précédentes, dans lequel l'étape de reformage est une étape de reformage de vapeur catalytique, à laquelle la charge est mise en contact avec un catalyseur en présence de vapeur et est soumise à des réactions de reformage avec la formation d'hydrogène.

5. Procédé selon l'une quelconque des revendications précédentes, dans lequel l'étape de séparation est réalisée par absorption par inversion de pression sur un matériau poreux d'absorption sélective.

6. Procédé selon l'une quelconque des revendications précédentes, dans lequel l'étape de recyclage est réalisée au moyen d'un éjecteur utilisant en tant que fluide d'entraînement pour le recyclage d'hydrogène un écoulement de vapeur provenant de l'étape de reformage.

7. Procédé selon l'une quelconque des revendications précédentes, comprenant une étape de recyclage de gaz, à laquelle le flux de gaz récupéré séparé à l'étape de séparation est recyclé vers l'étape de reformage.

8. Procédé selon l'une quelconque des revendications précédentes, dans lequel l'étape de recyclage est réalisée dans des conditions thermodynamiques sélectionnées pour fonctionner, dans un graphique ternaire C-O-H exprimé en pourcentages molaires, dans une zone ayant du H entre 70 et 90 %, du carbone entre 5 et 35 %, de l'oxygène entre 10 et 40 %.

9. Procédé selon l'une quelconque des revendications précédentes, dans lequel la partie de l'hydrogène à concentration élevée de l'étape de séparation qui est recyclée vers l'étape de reformage est sélectionnée pour résulter en une fraction sèche d'hydrogène entrant dans l'étape de reformage supérieure ou égale à 60 %, de préférence supérieure ou égale à 70 % ou plus, en moles par rapport à la charge à reformer fournie à l'étape de reformage.

10. Procédé selon l'une quelconque des revendications précédentes, dans lequel lorsque le procédé est en régime permanent, en d'autres termes après les étapes transitoires d'initiation et de déclenchement des réactions de reformage, l'étape de reformage à la vapeur est réalisée uniquement avec la vapeur déjà présente et utilisée dans le procédé sans fournir de vapeur de l'extérieur ; et sans nécessairement produire de vapeur à exporter vers l'extérieur.
